# EUROPEAN PATENT SPECIFICATION

(11) **EP 1 188 339 B1**
(45) Date of publication and mention of the grant of the patent: **24.11.2004**
(21) Application number: 00943160.2
(22) Date of filing: 23.06.2000
(51) Int. Cl.: H04Q 7/38

(54) **METHOD AND SYSTEM FOR PROVIDING TELECOMMUNICATION SERVICES ACROSS NETWORKS THAT USE DIFFERENT PROTOCOLS**
VERFAHREN UND SYSTEM ZUM BEREITSTELLEN VON TELEKOMMUNIKATIONSDIENSTEN ÜBER NETZWERKE MIT UNTERSCHIEDLICHEN PROTOKOLLEN
PROCEDE ET SYSTEME PERMETTANT DE FOURNIR DES SERVICES DE TELECOMMUNICATIONS SUR DES RESEAUX UTILISANT DES PROTOCOLES DIFFERENTS

(30) Priority: 24.06.1999 US 141110 P
(43) Date of publication of application: 20.03.2002
(73) Proprietor: Hewlett-Packard Development Company, L.P., Houston, Texas 77070 (US)
(72) Inventor: LAMB, James, A., Elkhorn, NV 68022 (US); DE VERTEUIL, Andre, Toronto, Ontario M5M 1J4 (CA)
(74) Representative: Liesegang, Eva
(86) International application number: PCT/US2000/017514
(87) International publication number: WO 2000/079827

(56) References cited:
- EP-A- 0 758 835
- WO-A-97/01942
- WO-A-98/00986
- WO-A-98/30050
- WO-A-98/37724
- US-A- 5 497 412
- US-A- 5 610 974
- US-A- 5 862 481

## Description

### BACKGROUND OF THE INVENTION

### 1. FIELD OF THE INVENTION

This invention relates generally to telecommunication services, and, more specifically to a system and method for providing telecommunication services across networks that use different protocols.

### 2. DESCRIPTION OF BACKGROUND ART

WO 98 00986 A teaches a gateway unit that serves as a protocol translation interface between two or more wireless communication systems.

WO 98 37724 A discloses a system for enabling network conversion between multiple communication networks, each utilizing its own protocol, which includes a main centralized database which stores registration status data; the database being coupled to a computer system acting as a centralized administrative node.

In many conventional telecommunication networks that provide wireless telecommunication services, such as ANSI-41 and GSM networks, each mobile phone user is associated with a Mobile Switching Center (MSC) that is referred to as a user's "home MSC." A mobile phone user's home MSC receives all calls for the user and either (1) routes the calls to the user if the user is within the coverage area of the home MSC or (2) if the user is not within the coverage area of the home MSC, routes the calls to the MSC at which the user is currently registered (the "serving MSC"), where the serving MSC then routes the calls to the user.

In conventional ANSI-41 and GSM networks, each MSC is associated with a Home Location Register (HLR), a Visitor Location Register (VLR) and an Authentication Center (AuC). The functions of an AuC include storing authentication information for mobile phone users whose home MSC is the MSC associated with the AuC. The functions of an HLR include storing profiles of users whose home MSC is the MSC associated with the HLR and, for each of such users, storing the identity of the MSC at which the user is currently registered. The functions of VLR include storing users profiles of roaming users temporarily registered at the MSC associated with the VLR.

When a user roams out of the territory of his home MSC and into the territory of a serving MSC, the VLR of the serving MSC (the "serving VLR") needs to communicate with the HLR of the home MSC (the "home HLR") in order to enable the user to register at the serving MSC and to enable the home MSC to route calls for the user to the serving MSC. For instance, the serving VLR informs the home HLR that the user has requested registration at the serving MSC, and the home HLR sends the serving VLR user profile information. Additionally, when the home MSC receives a call for the user, the serving VLR sends the routing number of the serving MSC to the home HLR, which enables the home MSC to route the call to the serving MSC.

Due to the variety of portable telecommunication devices, it is not uncommon for customers to subscribe to telecommunication services that are provided by multiple telecommunication networks. A customer may subscribe to multiple telecommunication networks that each cover a distinct and separate service area or that have overlapping service areas, as is the case if a customer subscribes to a satellite based system and an ANSI-41 based system both having broad service coverage in North America. In some cases the customer may use a device that is capable of working in multiple networks, such as a dual mode mobile phone that supports two of the wireless air interface standards commonly used in North America (e.g., PCS 1900 and TDMA standards), or the customer may use multiple devices where each device operates in a specific telecommunications network. Customers may require access to telecommunication services from one network at a time or from multiple networks simultaneously depending on their current geographic location and the service coverage of the telecommunications networks to which they subscribe.

As indicated above, in order to provide seamless services to customers as they travel or switch between different networks, various HLRs and VLRs in the different networks need to communicate with each other. However, this can be problematic because many of the telecommunication networks use different protocols for communications between the HLRs, VLRs, AuCs, and MSCs within their own networks. For instance, many North American networks use the ANSI-41 protocol and many European networks use the GSM protocol. Therefore, it is necessary to enable networks that use different protocols to communicate with each other in order to provide seamless service to customers as they move between these networks.

There are known methods for enabling communication between disparate networks that use different protocols. One such method, which is described in U.S. Patent No. 5,862,481, provides an Inter-Technology Roaming Proxy (IP) that translates requests from one network to another. One problem with this method is that if a lot of networks are involved, a lot of additional equipment is required. For N networks, the number of IPs required is N(N-1). For example, two networks require two (2) IPs and four networks require twelve (12) IPs. Additionally, this method fails to provide a way to manage feature and service interactions when a customer has simultaneously access to telecommunications services from multiple networks.

Therefore, it is desirable to provide seamless services to customers as they roam into disparate networks without using as much equipment as known methods for providing such services. Additionally, it is desirable to manage feature and service interactions for customers that have simultaneous access to telecommunication services in multiple networks.

The present invention provides a method for routing a call to a mobile communication device user according to claim 1 and a communication system according to claim 4.

### SUMMARY OF THE INVENTION

The present invention provides a method and system for providing seamless, wireless telecommunication services to customers that move between disparate networks. A Universal Location Service Register (ULSR) communicates and provides mobility management and authentication functions across networks that use different protocols. Instead of each MSC communicating with its own HLR and AnC to exchange user information, each MSC communicates with the ULSR to exchange such information, thereby eliminating the need for associating each MSC with its own HLR and AuC. The ULSR communicates with the MSCs in each network serviced by the ULSR in accordance with the protocol of that network. The ULSR store user profiles that may include the identity of the user, anthentication information for the user's mobile phone, a list of networks the user is authorized to access, and the identity of the MSC at which the user is currently registered.

When a user roams into a network other than the user's home network and requests registration at an MSC in the such network (the "serving network"), the MSC (the "serving MSC") notifies the ULSR that the user has requested registration. The ULSR determines whether the user can be registered at the serving MSC, and, if so, authorizes the registration. When a call is received for the user at an MSC in the nser's home network, the home MSC sends a request for the routing number to the ULSR. The ULSR retrieves the user's profile and determines that the user is registered at the serving MSC. The ULSR sends a request for a routing number to the serving MSC, and the serving MSC provides the ULSR with a routing number. The ULSR then sends the routing number to the home MSC, and the home MSC routes the call to the serving MSC, which routes the call to the user. The ULSR communicates with the home network in accordance with the protocol used by the home network, and the ULSR communicates with the serving network in accordance with the protocol used by the serving network.

In one embodiment, the ULSR also manages feature and service interactions for customers. For instance, the ULSR may determine, based on the user's profile, whether a user is subscribed to call waiting or call forwarding service and then instruct the applicable MSC accordingly. In yet another embodiment, if a user is simultaneously registered in multiple networks, the ULSR will use information stored in the user's profile and/or internal logic to determine to which network a call for the user should be forwarded.

Therefore, the present invention provides seamless service to wireless device users as they roam across multiple networks while reducing the amount of equipment used by known methods. Additionally, according to one embodiment, the present invention manages feature and service interactions for users that have simultaneous access to telecommunication services in multiple networks.

### BRIEF DESCRIPTION OF THE DRAWINGS

Figure **1** illustrates a ULSR coupled to multiple telecommunications networks in accordance with one embodiment of the present invention.
Figures **2a-c** illustrate a method according to one embodiment of the present invention for registering a mobile phone user in network A, where the mobile phone user was previously registered in network B.
Figures **3a-b** illustrate a method according to one embodiment of the present invention for registering a mobile phone user in an ANSI-41 network, where the user was previously registered in a GSM network.
Figures **4a-4c** illustrate a method according to one embodiment of the present invention for registering a mobile phone user in a GSM network, where the user was previously registered in an ANSI-41 network.
Figures **5a-5c** illustrate a method according to one embodiment of the present invention for routing a call to a mobile phone user who has a home network but is currently registered in another network.
Figures **6a-6c** illustrate a method according to one embodiment of the present invention for routing a call to a mobile phone user who has an ANSI-41 home network, but is currently registered in a GSM network.
Figures **7a-7c** illustrate a method according to one embodiment of the present invention for routing a call to a mobile phone user simultaneously registered in both a serving ANSI-41 network and a serving GSM network.
Figure **8** illustrates an internal architecture for the ULSR according to one embodiment of the present invention.
Figure **9** illustrates an example, according to one embodiment of the present invention, of how the internal architecture works to process a LocationRequest message from an ANSI-41 MSC.

### DETAILED DESCRIPTION OF THE PREFERRED EMBODIMENTS

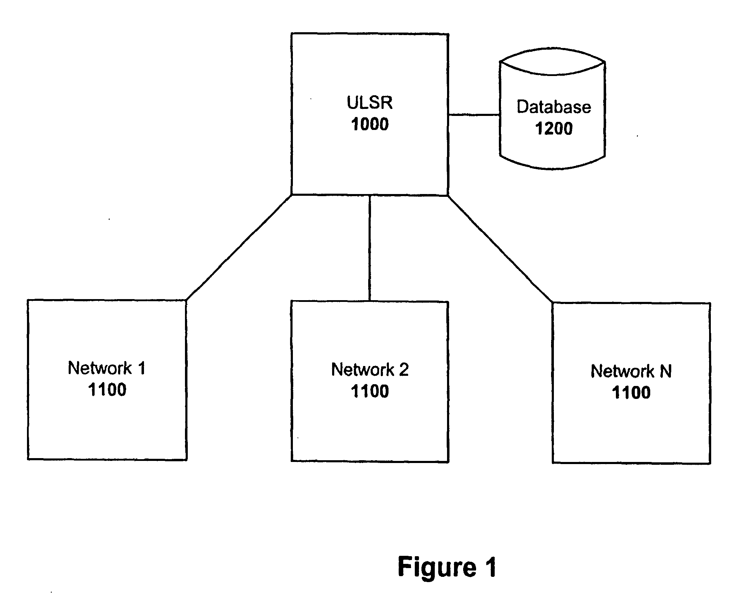

Figure **1** illustrates a Universal Location Service Register (ULSR) **1000** in accordance with the present invention. The ULSR **1000** can communicate and provide mobility management and authentication functions across telecommunication networks **1100** that use different protocols. (*e*.*g*., ANSI-41 networks and GSM networks). As will be discussed below, in one embodiment, the ULSR **1000** is also capable of managing feature and service interactions for instances when a subscriber has access to multiple networks **1100.**

Because the ULSR **1000** is capable of communicating independently and simultaneously with networks that use different signaling standards, seamless service can be provided to a mobile phone user who roams into a network using a different protocol than his home network. The ULSR **1000** can receive a message from one network and respond to that message, even if processing the message involves sending a message to and receiving a message from another network that uses a different signaling protocol. For instance, a LocationRequest message received by the ULSR **1000** from an ANSI-41 network may result in the ULSR **1000** sending a Provide_Roaming_Number message to a GSM network if the ULSR **1000** knows that the subscriber is in the GSM network when the LocationRequest message is received. When the ULSR **1000** receives a response from the GSM network to its Provide_Roaming_Number request, the ULSR **1000** uses the information in the response to reply to the ANSI-41 network's LocationRequest message.

The ULSR **1000** has access to a database **1200** that stores information about subscribers to the networks **1100** serviced by ULSR **1000**, where the information in the database **1200** enables the ULSR **1000** to provide mobility management and authentication functions for all the networks **1100** that the ULSR **1000** supports. Such information may include the location at which the user is currently registered, the user's home network, a list of networks to which a user is authorized to access, and data for authenticating the user. Some of the information in the database **1200** may be specific to one network, and other information may be used to provide mobility and authentication functions for multiple networks. When a specific network needs information from the database **1200**, the ULSR **1000** encodes the information in accordance with the format and protocol required by that network.

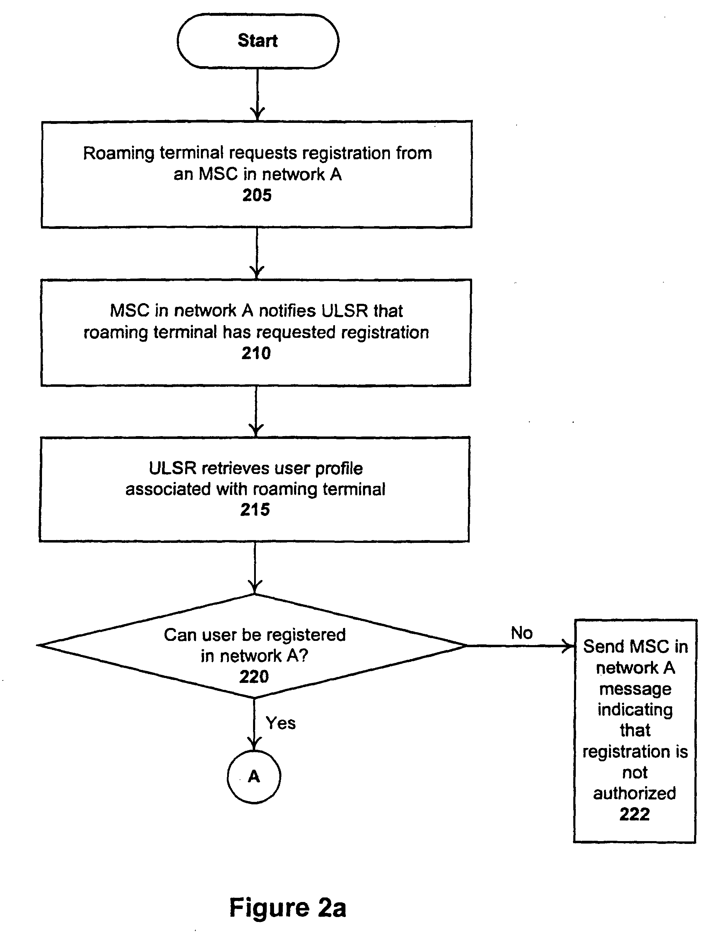

Figures **2a - 2c** illustrate a method according to one embodiment of the present invention for registering a mobile phone in a network A (which may be a GSM, ANSI-41, or other network), where the mobile phone was previously registered in a network B (which may be a GSM, ANSI-41, or other network). The registration procedure begins when the roaming mobile phone in the territory of network A realizes it can no longer communicate with network B. When this happens, the roaming terminal requests **205** registration from an MSC **2300** in network A and sends information identifying itself (*e.g.*, Mobile Serial Number (MIN), Electronic Serial Number (ESN), or International Mobile Subscriber Identity (IMSI)) to the MSC **2300** in network A. The MSC **2300** in network A notifies **210** the ULSR **1000** that the mobile phone has requested registration in network A and sends the ULSR **1000** information identifying the mobile phone. In response to receiving this message from the MSC **2300** in network A, the ULSR **1000** retrieves **215** from its database **1200** the user profile associated with mobile phone and determines **220** whether the mobile phone can be registered in network A. If so, the ULSR **1000** updates **225** the database **1200** to reflect that the mobile phone is currently registered at the MSC **2300** in network A, and the ULSR **1000** sends a message to the MSC **2300** in network A authorizing **230** such registration. The ULSR **1000** also sends **230** the user's profile to the MSC **2300** in network A. If the mobile phone cannot be registered in network A, the ULSR responds to the registration request by sending **222** the MSC **2300** in network A a message indicating that registration is not authorized. The ULSR **1000** and network A communicate with each other in accordance with the protocol of network A.

The ULSR **1000** also determines **235** whether the user can be simultaneously registered in both networks A and B. If so, the process is complete. If not, the ULSR **1000** sends **240** a message to the MSC **2400** in network B at which the mobile phone was previously registered, canceling the registration of the mobile phone in network B. The ULSR **1000** and network B communicate with each other in accordance with the protocol of network B.

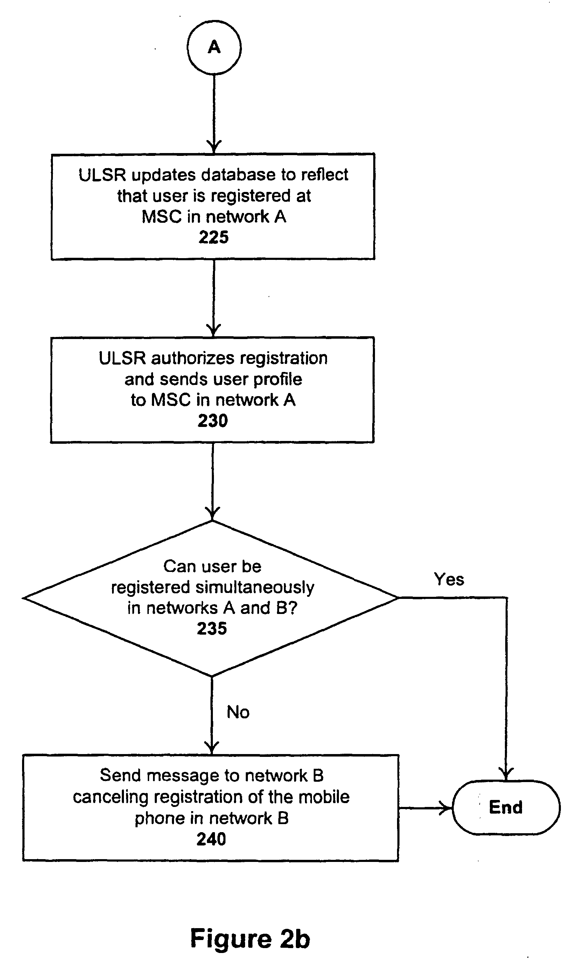

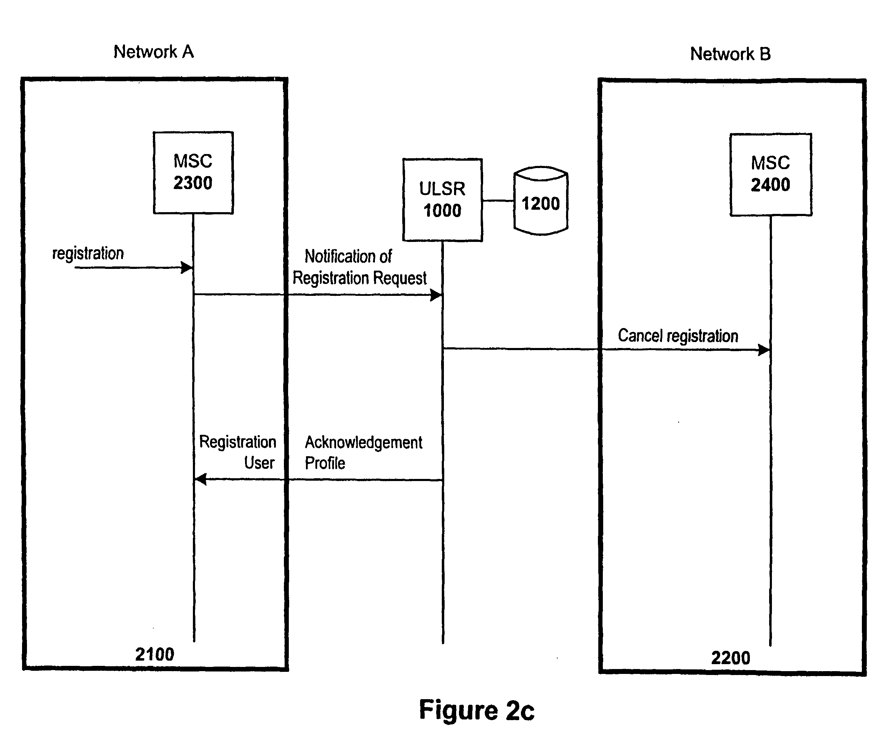

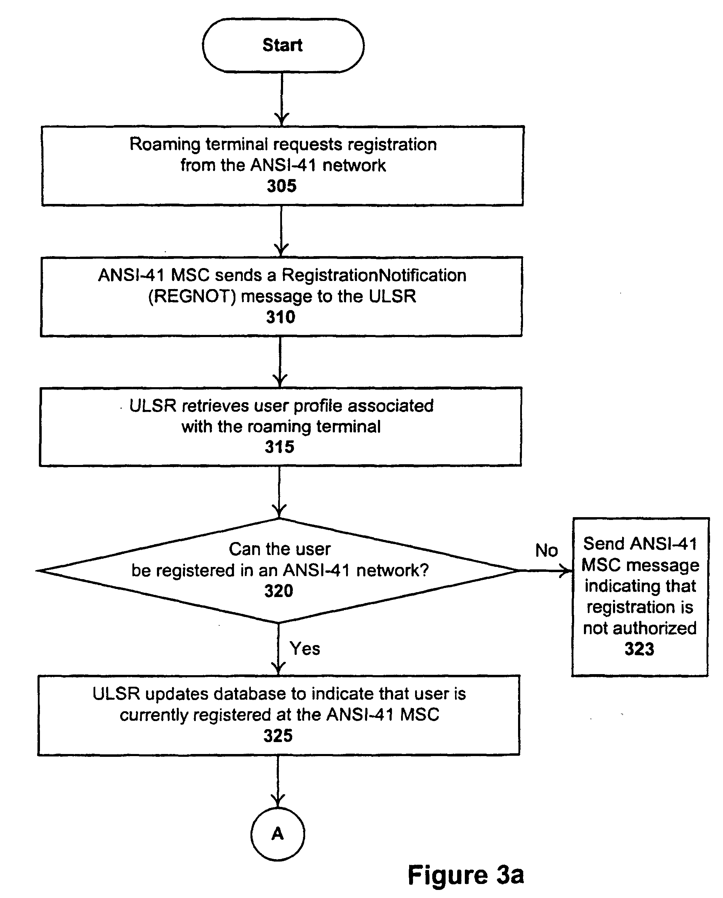

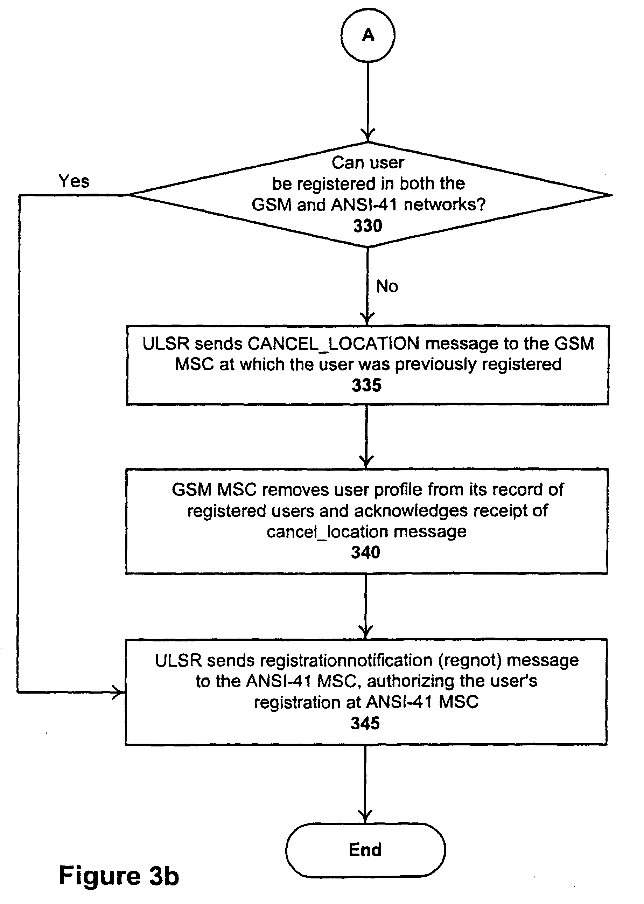

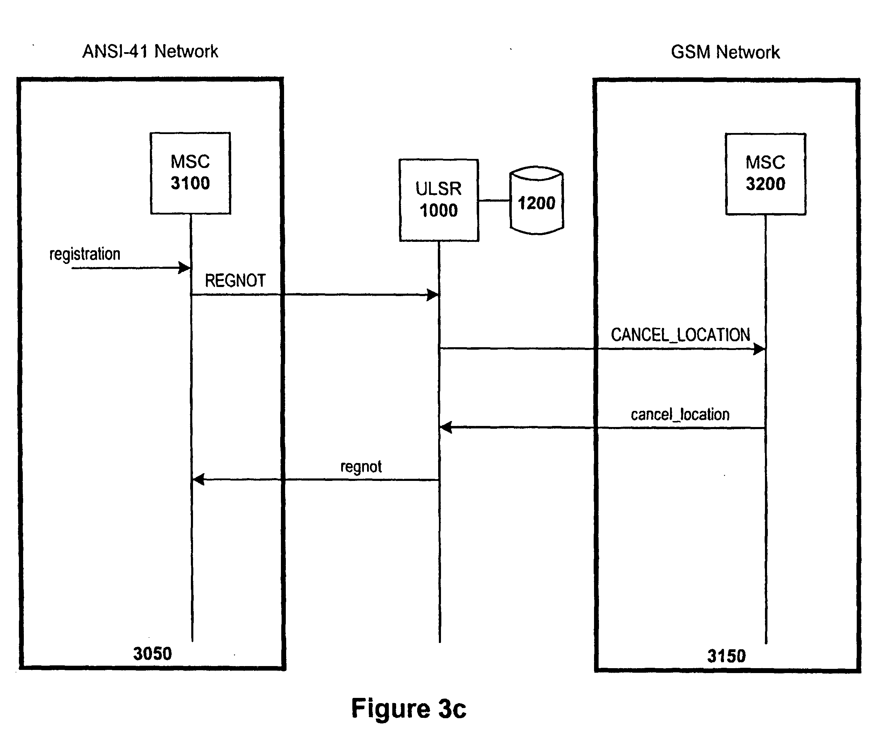

Figures **3a** and **3b** illustrate an example of using the method discussed with respect to Figure **2** for registering a mobile phone user in an ANSI-41 network **3050,** where the user was previously registered in a GSM network **3150.** Note that the MIN and ESN parameters, as well as the RegistrationNotification (REGNOT), registrationnotification (regnot), RegistrationCancellation (REGCAN), registrationcancellation (regcan), LocationRequest (LOCREQ), and locationrequest (locreq) messages, discussed herein are defined by the ANSI-41 protocol. Similarly, the IMSI parameter and the CANCEL_LOCATION, cancel_location, LOCATION_UPDATE, location_update, INSERT_SUBSCRIBER_DATA, insert_subscriber_data, SEND PARAMETER, send parameter, PROVIDE_ROAMING_NUMBER, and provide_roaming_number messages discussed herein are defined by the GSM protocol. Note also that the names or acronyms for some messages are in upper case letters and some are in lower case letters. In accordance with the ANSI and GSM semantics, a message in lower case letters is a response to a message in upper case letters with the same name.

The registration procedure begins when the roaming mobile phone realizes it can no longer communicate with the GSM network **3150.** When this happens, the roaming terminal requests **305** registration from the ANSI-41 network **3050** and uses its MIN and ESN information to identify itself. The MSC **3100** in the ANSI-41 network receiving the registration request (the "ANSI-41 MSC") sends **310** an ANSI-41 RegistrationNotification (REGNOT) message to the ULSR **1000,** where the REGNOT message indicates the registration request and includes the MIN and ESN information that identifies the mobile phone. The ULSR **1000** retrieves **315** the user profile associated with the mobile phone from database **1200** and determines **320** from the user profile whether the user can be registered in the ANSI-41 network **3050.** If the user cannot be registered in the ANSI-41 network **3050,** the ULSR sends **323** the ANSI-41 MSC 3100 a message indicating that registration is not authorized. If the user can be registered in an ANSI-41 network, the ULSR **1000** updates **325** the database **1200** to indicate that the user is currently registered and located at the ANSI-41 MSC **3100.**

The ULSR **1000** also determines **330** from the user profile whether the user can be simultaneously registered in both the ANSI-41 and GSM networks **3100, 3150.** If the user can be registered in only one of the networks at a time, the ULSR **1000** sends **335** a CANCEL_LOCATION message to the MSC **3200** in the GSM network **3150** at which the user was previously registered, indicating that the user is no longer registered at the GSM MSC **3200.** In response to receiving the CANCEL_LOCATION message, the GSM MSC **3200** removes **340** the user profile from its records of registered users and acknowledges **340** receipt of the CANCEL_LOCATION message by sending a cancel_location acknowledgment message.

The ULSR **1000** also sends **345** a registrationnotification (regnot) message to the ANSI-41 MSC **3100,** where the regnot message includes the customer's profile and authorizes the user's registration at the ANSI-41 MSC **3100.** The ULSR **1000** communicates with the ANSI-41 network **3050** in accordance with standard ANSI-41 protocols and with the GSM network **3150** in accordance with standard GSM protocols.

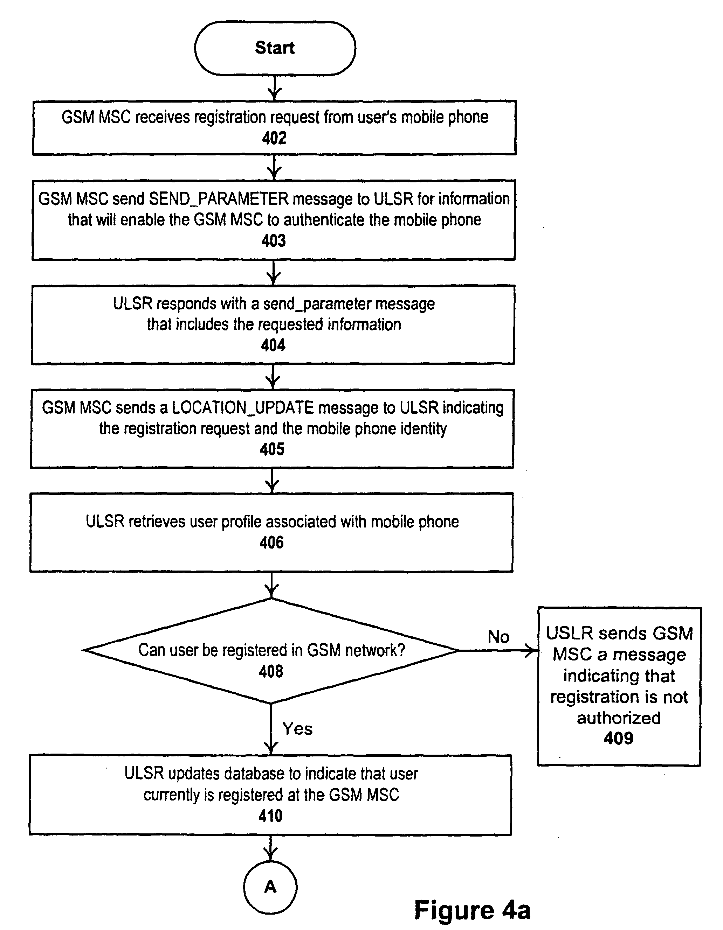

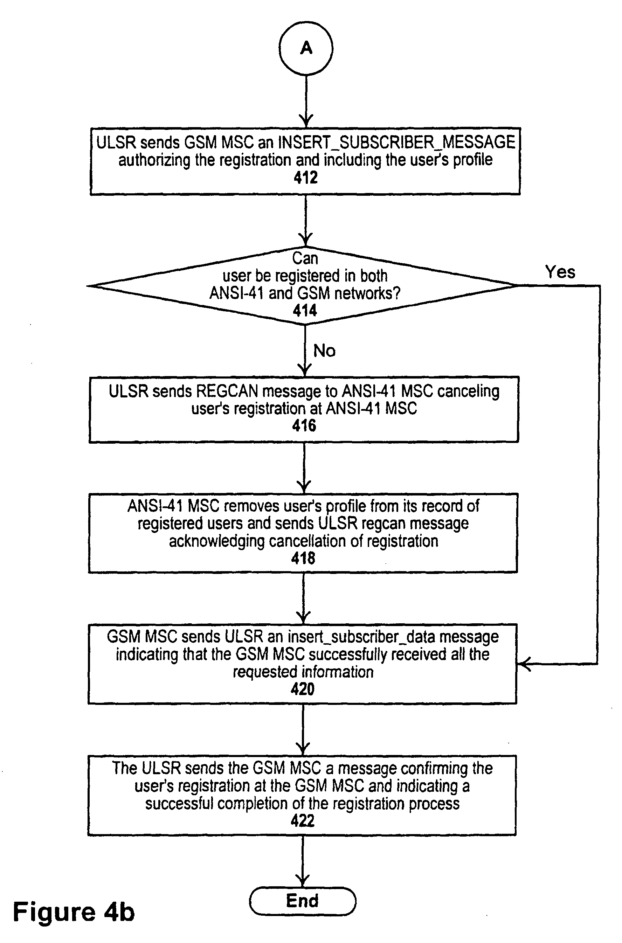

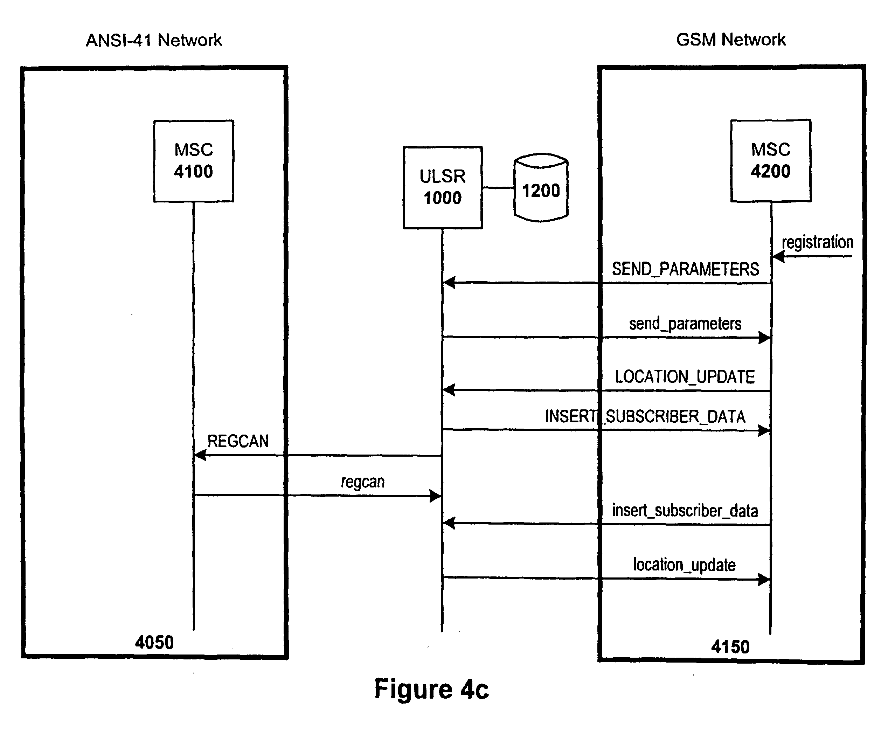

Figures **4a - 4c** illustrate an example of using the method described with respect to Figure **2** for registering a mobile phone user in a GSM network **4150,** where the user was previously registered in an ANSI-41 network **4050.** The registration procedure begins when the roaming mobile phone realizes that it can no longer communicate with the ANSI-41 network **4050.** When this happens, the roaming terminal requests registration from the GSM network **4150** and uses its IMSI to identify itself. The MSC **4200** in the GSM network **4150** receives **402** the registration request from the mobile phone and sends **403** a SEND_PARAMETERS message to the ULSR **1000,** where the SEND_PARAMETERS message asks the ULSR **1000** for information needed by the GSM MSC to authenticate the roaming mobile phone. The ULSR **1000** sends **404** the GSM MSC the requested information in the form of a send_parameter message. If the GSM MSC **4200** is able to authenticate the mobile phone, it sends **405** a LOCATION_UPDATE message to the ULSR **1000**, where the LOCATION_UPDATE message indicates the registration request and includes the IMSI information that identifies the mobile phone. The ULSR **1000** retrieves **406** the user profile associated with the mobile phone from its database **1200** and determines **408** from the user profile whether the user can be registered in the GSM network **4150**. If the user cannot be registered in the GSM network **4150**, the ULSR **1000** sends **409** the GSM MSC a message indicating that registration is not authorized. If the user can be registered in the GSM network **4150**, the ULSR **1000** updates **410** database **1200** to indicate that the user is currently registered at the GSM MSC **4200** and sends **412** the GSM MSC **4200** an INSERT_SUBSCRIBER_DATA message that authorizes the user's registration at the GSM MSC **4200** and includes the user's profile.

The ULSR **1000** also determines **414** from the user's profile whether the user can be registered in both the ANSI-41 and GSM networks **4050, 4150.** If the user can be registered in only one network, the ULSR **1000** sends **416** a RegistrationCancellation (REGCAN) message to the ANSI-41 MSC **4100** to cancel the user's mobile phone registration at the ANSI-41 MSC **4100.** In response to receiving the REGCAN message, the ANSI-41 MSC **4100** removes **418** the user's profile from its records of registered users, and sends **418** the ULSR **1000** a regcan message acknowledging that the user's mobile phone is no longer registered with the ANSI-41 MSC **4100.**

After the GSM MSC **4200** successfully receives the INSERT_SUBCRIBER_DATA message with the user profile, it sends **420** the ULSR **1000** a response insert_subscriber_data message acknowledging that the GSM MSC **4200** successfully received the requested information. The ULSR **1000** then sends **422** the GSM MSC **4200** a location_update message confirming the user's registration at the GSM MSC **4200** and indication a successful completion to the registration process.

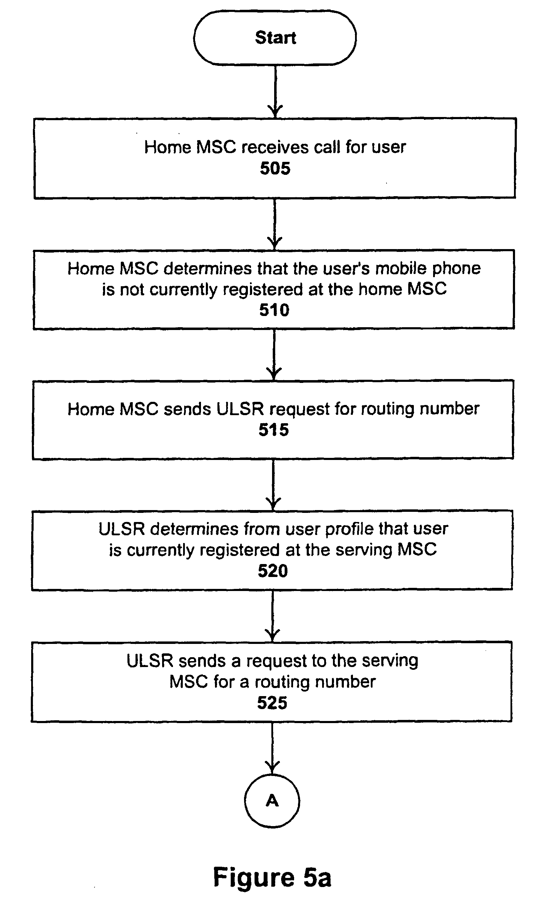

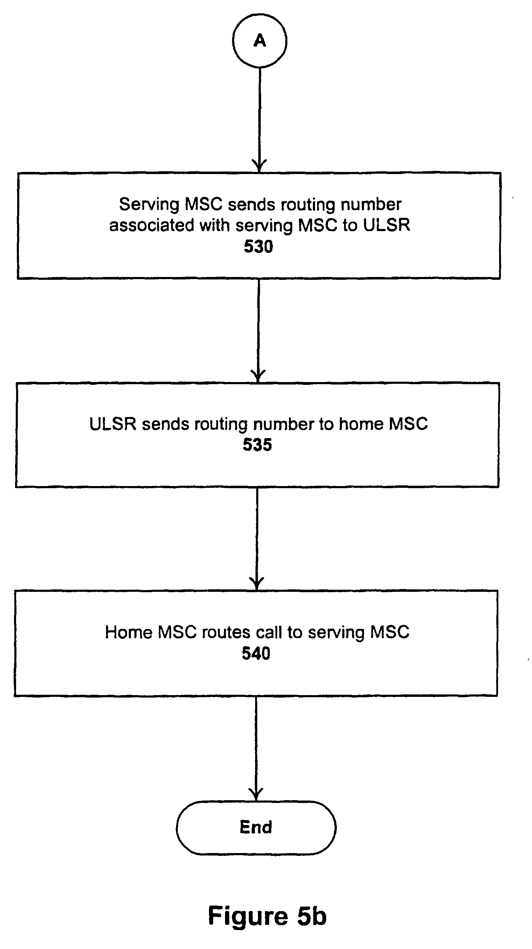

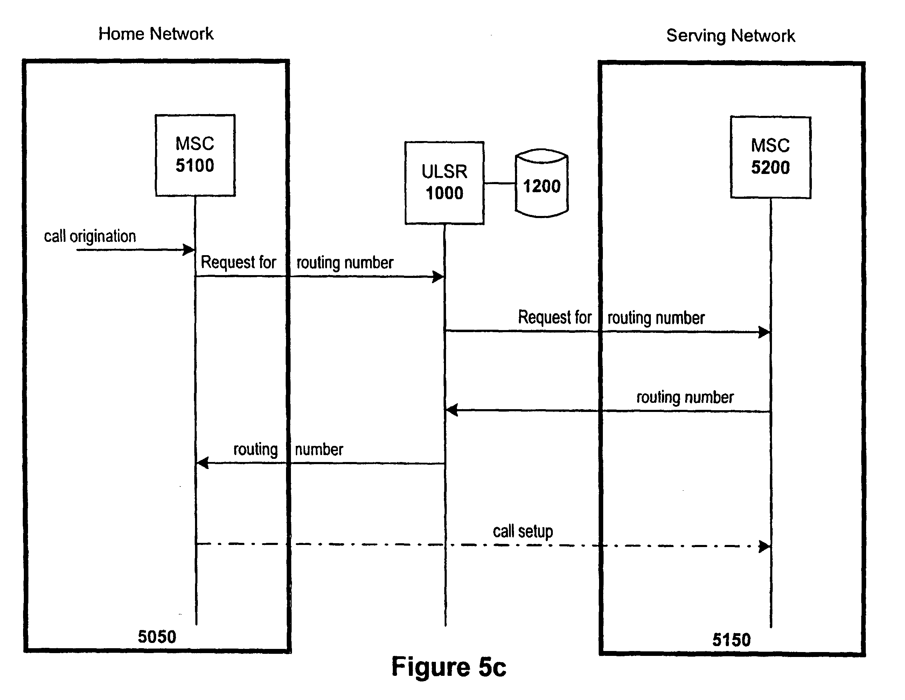

Figures **5a - 5c** illustrate a method according to one embodiment of the present invention for routing a call to a mobile phone user who has a home network **5050** but is currently registered in another network **5150** (the "serving network"). A call for the user is received **505** at the user's home MSC **5100** in the home network **5050** (the "home MSC"). The home MSC **5100** determines **510** that the user's mobile phone is currently not registered at the home MSC **5100,** and sends **515** a request to the ULSR **1000** for a number to which to route the call, where the request includes the identity of the mobile phone. The ULSR **1000** retrieves the user profile associated with the mobile phone and determines **520** from the profile that the user's mobile phone is currently registered at an MSC **5200** in the serving network **5150** ("the serving MSC"). The ULSR **1000** then sends **525** a request to the serving MSC **5200** for a routing number, and the serving MSC **5200** sends **530** the ULSR **1000** a routing number associated with the serving MSC **5200**. The ULSR **1000** then forwards **535** the routing number to the home MSC **5100**, and the home MSC **5100** routes **540** the call to the serving MSC **5200**. The ULSR **1000** uses the protocol of the home network **5050** to communicate with the home MSC **5100** and uses the protocol of the serving network **5150** to communicate with the serving MSC **5200.**

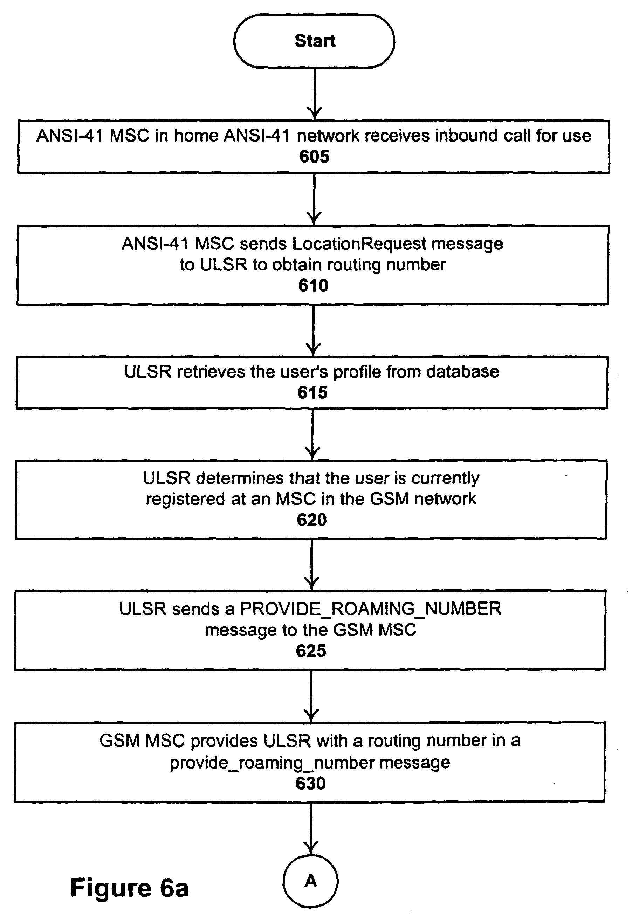

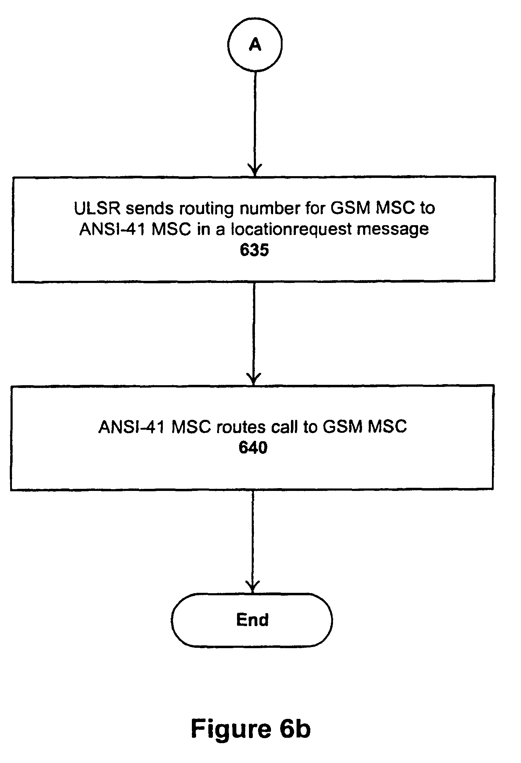

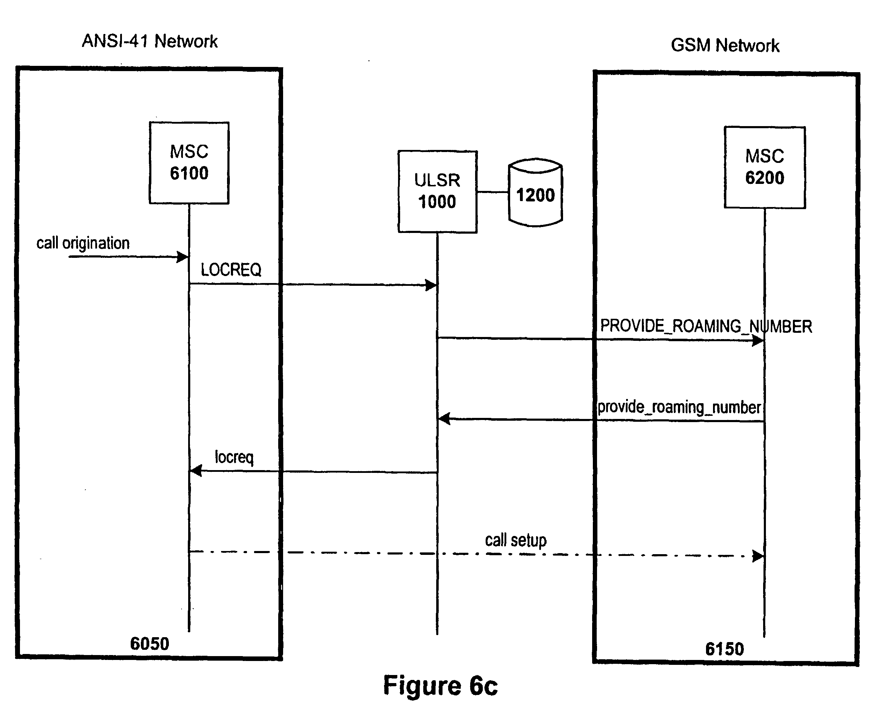

Figures **6a - 6c** illustrate an example of using the method described with respect to Figures **5a-5c** for routing a call to a user who has an ANSI-41 home network **6050** but is currently registered in a GSM network **6150**. The in-bound call for the user is received **605** at the user's home MSC **6100** in the ANSI-41 network **6050.** The ANSI-41 MSC **6100** determines that the user's mobile phone is not currently registered at the ANSI-41 MSC **6100** and, therefore, sends **610** a LocationRequest message to the ULSR **1000** to obtain a routing number that can be used to route the incoming call to the mobile phone user. In response to receiving the LocationRequest message, the ULSR **1000** retrieves **615** the user's profile from its database **1200**. The ULSR **1000** determines **620** from the user's profile that the mobile phone user is registered at an MSC **6200** in the GSM network **6150** and sends **625** a PROVIDE_ROAMING_NUMBER message (which is a standard GSM message to request a number to which to route a call) to the MSC **6200** in the GSM network **6150** at which the mobile phone user is registered. The GSM MSC **6200** provides **630** the ULSR **1000** with one of its routing numbers in a provide_roaming_number message. The ULSR **1000** then responds **635** to the ANSI-41 MSC **6100** with a locationrequest message that contains the routing number, and the ANSI-41 MSC **6100** routes **640** the call to the GSM MSC **6200** for the user.

In one embodiment, the ULSR **1000** can also manage services provided to customers in multiple communication networks. Examples of such services are call screening and number translation. In an alternate embodiment, such services are provided by another system (and not the ULSR **1000**) accessible to multiple networks, where such services are provided using methods similar to those described herein.

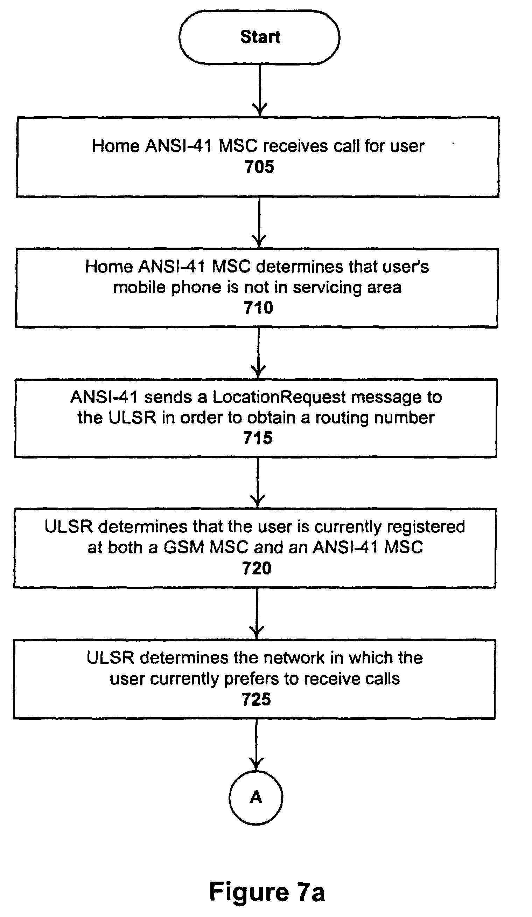

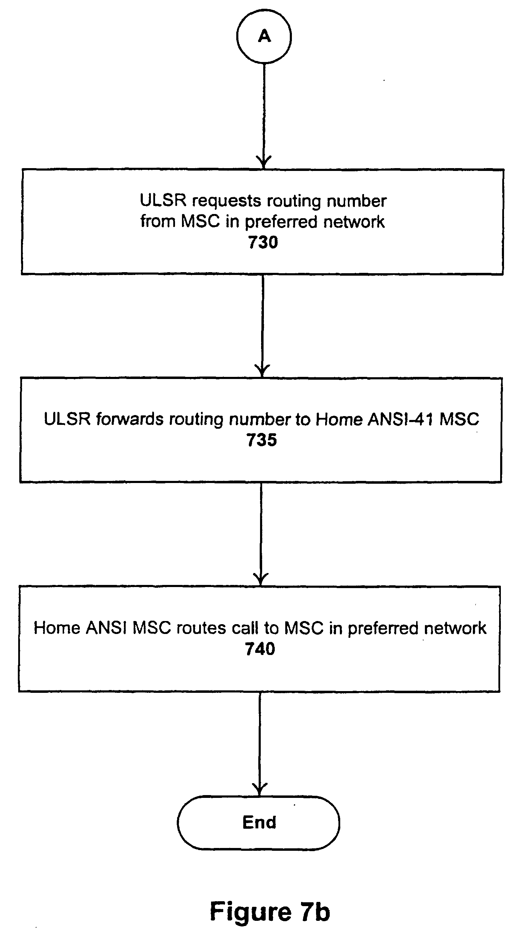

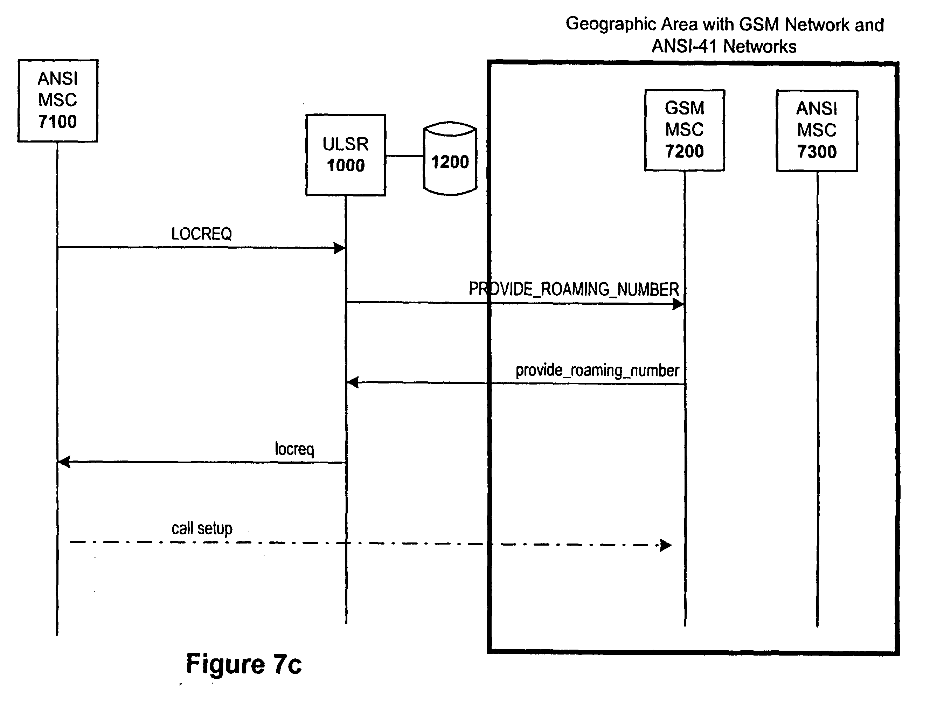

In one embodiment, the ULSR **1000** enables customers to be registered simultaneously in multiple networks. In this embodiment, the ULSR **1000** manages the interaction of services between networks for each subscriber. Figures **7a-7c** illustrate an example a method according to one embodiment of the present invention for routing a call to a mobile phone user simultaneously registered in both a serving ANSI-41 network **7200** and a serving GSM network **7300.** In this example, a call is received for the mobile phone user at the user's home ANSI-41 MSC **7100** and routed to a serving GSM MSC **7200,** but this method also applies if a call is received at a user's home GSM MSC and routed to either a servicing ANSI-41 MSC or a servicing GSM MSC.

The home ANSI-41 MSC **7100** receives **705** a call for the mobile phone user and determines whether the user's mobile phone is within its servicing area (*i*.*e*., the home ANSI-41 MSC **7100** determines whether the mobile phone is currently registered at the home ANSI-41 MSC **7100**). In response to determining **710** that the user's mobile phone is not in its servicing area, the home ANSI-41 MSC **7100** sends **715** a LocationRequest message to the ULSR **1000** in order to obtain a number to which to route the call (note that if a home GSM MSC had received the call, a LOCATION_UPDATE message would be sent). The ULSR **1000** checks its database and determines **720** that the user is currently registered at both a GSM MSC **7200** and an ANSI-41 MSC **7300.** Using information in the user's profile (which is stored in the ULSR's **1000** database **1200),** the ULSR **1000** then determines **725** in which network in the coverage area in which the user is currently registered the user prefers to receive calls. In this example, the ULSR **1000** determines that the preferred network is the GSM network **7150** and, consequently, requests **730** a routing number from the GSM MSC **7200** in a PROVIDE_ROAMING_NUMBER message. The GSM MSC **7200** sends the ULSR **1000** a routing number in a provide_roaming_number message, and the ULSR **1000** forwards **735** the routing number to the home ANSI-41 MSC **7100** in a locationrequest message. The home ANSI-41 MSC **7100** then routes **740** the call to the GSM MSC **7200**.

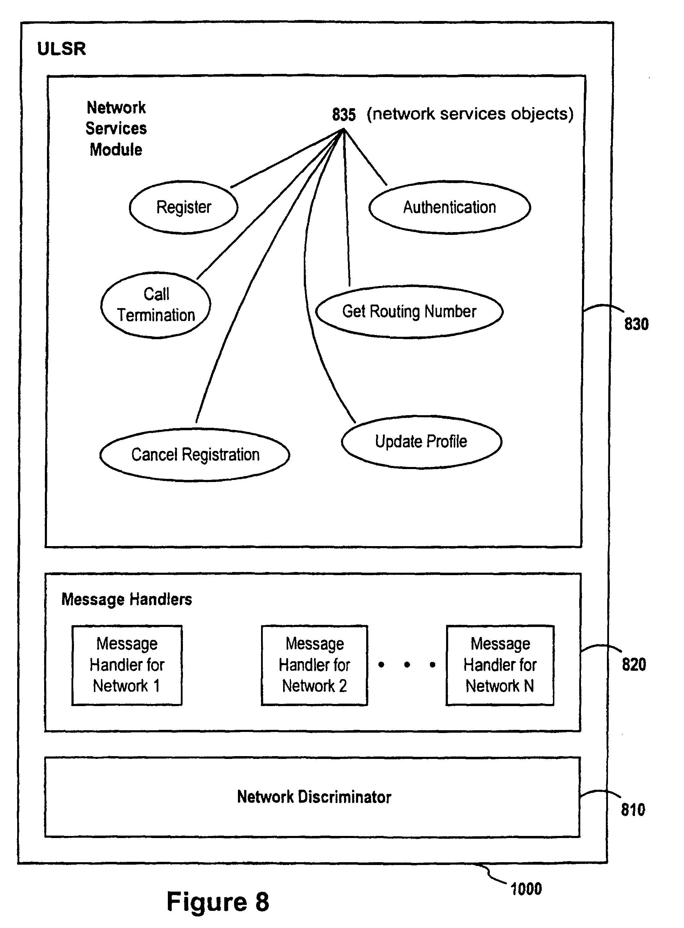

Figure **8** illustrates the internal architecture of the ULSR **1000** according to one embodiment of the present invention. The ULSR **1000** includes a network services software module **830,** a message handler software module **820,** and a network discriminator software module **810.** In one embodiment, these modules **810, 820,** and **830** are programmed in the 'C' programming language and run on Compaq Computer Corporation's Himilaya hardware with the NSK operating system and Compaq's Intelligent Network Server middleware software, but those skilled in the art will appreciate that the ULSR can be implemented using other software and hardware. The ULSR **1000** also includes appropriate interfaces (not shown) between the modules **810**, **820**, and **830**, as well as an interface (not shown) to database **1200**. The ULSR **1000** may also include interfaces for provisioning operations and maintenance of the platform.

The network discriminator **810** serves as an interface to any network elements that communicate with the ULSR **1000.** For each message received at the ULSR **1000,** the network discriminator **810** determines the type of network (e.g., ANSI-41, GSM, etc.) from which the message was sent based on the message format.

Once the network type is identified, the network discriminator module **810** sends the message to a message handler **820**. There is at least one message handler **820** for each type of network that the ULSR **1000** supports (where message handlers **820** can be added as the ULSR **1000** is required to support new network types), and the network discriminator module **810** sends the message to the message handler **820** for the type of network from which the message was sent. Such message handler **820** identifies the type of message received from the operation code within the message or other applicable part of the message. For instance, an ANSI-41 message handler **820** identifies an ANSI-41 RegistrationNotification message by the operation code 0x0, which is the operation code assigned to the RegistrationNotification message per the ANSI-41 Standard. Likewise, a GSM message handler **820** identifies a GSM UPDATE_LOCATION message from its operation code of 0x11 (per the GSM Standard). In one embodiment, the format of the operation code is the format defined in the Transaction Capability Application Part (TCAP) protocol.

After a message handler **820** identifies the type of message, it decodes the message and stores the substantive content of it in a conventional memory (not shown) in the ULSR **1000**. The message handler **820** then initiates a network service object **835,** which is a subcomponent of the network services module **830**. The message handlers **820** normalize all information that they pass to network services objects **835** so that such information does not include any formatting specific to a particular network.

The network services module **830** includes multiple network service objects **835,** where each object **835** performs one or more tasks required to process messages received from the message handlers. For every possible message that a message handler **820** can receive from a specific type of network, there is a network service object **835** that will be initiated by the message handler **820** to perform the function(s) required by the message. Because the network service objects **835** receive normalized messages from the message handlers **820,** they can each perform one or more functions for more than one type of network. In one embodiment, each network service object **835** performs a function for more than one network, whereas in an alternate embodiment, one or more network service objects **835** perform a function associated with a specific network.

Network service objects **835** can access and update the ULSR database **1200** as well as invoke other network service objects **835** as part of their normal execution. Additionally, network service objects **835** may initiate the transmission of a message to network elements in response to receiving a message from a network or for other reasons, such as changes to customer information stored in the ULSR database **1200** that require a message to be sent to one or more networks (e.g., a QualificationDirective message in an ANSI-41 network). Messages initiated by network service objects **835** are not formatted for a particular type of network, and, therefore, the message handlers **820** are responsible for properly formatting messages initiated by network service objects **835.** The network discriminator **810** is responsible for sending the formatted messages to the appropriate networks.

Figure **8** illustrates some examples of various types of network service objects **835**, but in no way does figure **8** illustrate a complete set of the types of network services objects. In one embodiment, the Register Network object executes the logic required to process messages received by the ULSR for devices attempting to register in a network (e.g., a RegistrationNotification message received from an ANSI-41 network). The CallTermination object processes messages received when calls are made to users subscribing to one of the networks supported by the ULSR. For instance, if the MSC receiving the incoming call is in an ANSI-41 network, then a Location Request message is received by the ULSR and executed by the Call Termination Network. The Authentication object determines whether a user is authorized to register at a particular network. The Get Routing Number object obtains a routing number for an MSC. For instance, during the processing of a call for a user, the Call Termination object may request a routing number from the Get Routing Number object, in which case the Get Routing Number object would manage the generation of messaging to request a routing number from the MSC at which the user is registered. The Cancel Registration object performs the necessary updates to the ULSR database **1200** and manages the messaging to cancel the registration of a user at a particular MSC. The Update Profile object manages the generation of messaging indicating that a registered user's profile has been updated. The network service object **835** described herein are examples of one embodiment, and those skilled in the art will appreciate that the types of network service objects **835** in the ULSR **1000** and their functions may vary.

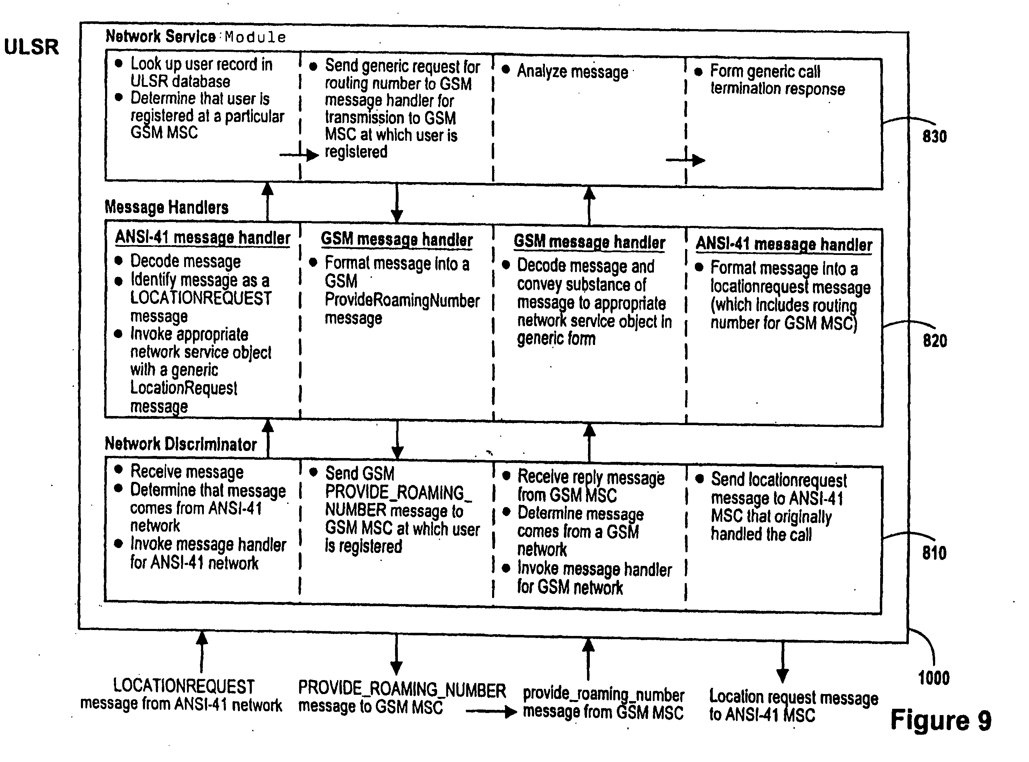

Figure **9** illustrates an example of how the network discriminator **810**, message handlers **820**, and network services module **830** work to process a call received at an ANSI-41 MSC for a user who is currently registered and able to receive a call in a GSM network. When the home ANSI-41 MSC receives the call and realizes that the user is registered elsewhere, it sends a LocationRequest messaged to the ULSR **1000** in order to get a routing number for the MSC at which the user is currently registered. The LocationRequest message is received by the network discriminator **810,** which identifies the message as an ANSI-41 message. The message discriminator **810** then invokes the ANSI-41 message handler **820,** which identifies the message as a LocationRequest message, normalizes the LocationRequest message and user information to remove network-specific dependencies, and invokes the appropriate network services object **835** with the normalized information.

The network services module **830** then processes the request. As part of its logic, it will look up the current state of the user in the ULSR database **1200** to determine whether a user is registered at any MSC. If the user is registered at an MSC, the network services module **830** sends a generic (*i.e.*, not formatted for a particular network serviced by the ULSR **1000)** request for a routing number to the message handler **820** associated with the network in which the user is registered. In this example, the user's record indicates that the user is currently registered at a particular GSM MSC. Consequently, the network services module **830** sends a generic message requesting a routing number for such GSM MSC to the GSM message handler **820**.

The GSM message handler **820** then formats the message into a GSM PROVIDE_ROAMING_NUMBER message, and the network discriminator **810** sends the PROVIDE_ROAMING_NUMBER message to the GSM MSC at which the user is registered. The GSM MSC replies to the ULSR **1000** with a routing number in the form of a provide_roaming_number message. The reply is received at the network discriminator **810**, which determines that the reply comes from a GSM network, and, therefore, the reply is sent to a GSM message handler **820**, which decodes the reply and sends the substantive content of the reply (e.g., the roaming number) in a generic, non-network dependent form to the appropriate network services module **830**. The network service module **830** analyzes the reply for a routing number for the GSM MSC and sends to the ANSI-41 message handler **820** a response that includes the routing number. The ANSI-41 message handler **820** formats a locationrequest message (which includes the routing number), and the network discriminator **810** sends it to the gateway ANSI-41 MSC that originally handled the call.

The present invention has been described in the context of a mobile phone network, but it could also be used to provide services for other wireless devices, such as pagers or portable computers for example. Moreover, although the present invention has been described above in terms of specific embodiments, it is anticipated that alterations and modifications thereof will no doubt become apparent to those skilled in the art. It is therefore intended that the following claims be interpreted as covering all such alternatives and modifications.

## Claims

1. A method for routing a call to a mobile communication device user from a first wireless communication system (5050) while the mobile communication device user is roaming in a second wireless communication system (5150), the first wireless communication system (5050) using a first protocol and the second wireless communication system (5150) using a second protocol, the first wireless communication system (5050) and the second wireless communication system (5150) both coupled to a computer system (1000) that is capable of communicating using either of the first protocol or the second protocol, the method comprising:
receiving (505) the call at the first wireless communication system (5050);
sending (515) a request, in accordance with the first protocol, from the first wireless communication system (5050) to the computer system (1000) for a routing number;
determining (520) at the computer system (1000) that the mobile communication device user is registered at the second wireless communication system (5150) by retrieving registration information from a database (1200) coupled to the computer system (100);
sending (525) a request, in accordance with the second protocol, from the computer system (1000) to the second wireless communication system (5 150) for a routing number for the second wireless communication system (5150);
in accordance with the second protocol, sending (530) the routing number from the second wireless communication system (5150) to the computer system (1000);
in accordance with the first protocol, sending (535) the routing number from the computer system (1000) to the first wireless communication system (5050); and
routing (540) the call from the first wireless communication system (5050) to the second wireless communication system (5150) using the routing number;
wherein the computer system (1000) operates to:
allow (235) a mobile communication device user to be registered simultaneously in multiple communication systems;
upon receiving a request for a routing number, determine (720) whether a mobile communication device user is registered simultaneously in multiple communication systems; and
in response to determining that a mobile communication device user is registered simultaneously in multiple communication systems, selecting (725) one communication system from which to request a routing number in accordance with a profile for the mobile communication device user, the profile being stored in the database (1200).

2. The method of claim 1, wherein prior to the step of receiving the call, the method comprises:
receiving (210) a message from the second wireless communication system (5150) indicating that the mobile communication device user has requested registration at the second wireless communication system (5150);
storing (225) in the database (1200) an indication that the mobile communication device user is registered in the second wireless communication system (5150);
determining (235) whether the mobile communication device user should be registered in only one wireless communication system; and
in response to determining that the mobile communication device user should be registered in only one wireless communication system, sending (240) a message to the first wireless communication system (5050) that the mobile communication device user is no longer registered at the first wireless communication system (5050).

3. The method of claim 1 or claim 2, wherein the computer system (1000) provides call screening and number translation services in accordance with mobile communication device user profiles stored in the database (1200).

4. A communication system comprising:
a first wireless communication system (5050) that communicates in accordance with a first protocol;
a second wireless communication system (5150) that communicates in accordance with a second protocol;
a database (1200) including registration information associated with a plurality of mobile communication devices in the first wireless communication system (5050) and the second wireless communication system (5150); and
a computer system (1000), operatively coupled to the database and in communication with the first wireless communication system (5050) and the second wireless communication system (5150), that is able to access the registration information in the database (1200) and communicate with the first wireless communication system (5050) in accordance with the first protocol and the second wireless communication system (5150) in accordance with the second protocol;
wherein the computer system (1000) comprises:
means for allowing (235) a mobile communication device user to be registered simultaneously in multiple communication systems;
means for determining (720), upon receiving a request for a routing number, whether a mobile communication device user is registered simultaneously in multiple communication systems; and
means for selecting (725), in response to determining that a mobile communication device user is registered simultaneously in multiple communication systems, one communication system from which to request a routing number in accordance with a profile for the mobile communication device user, the profile being stored in the database (1200).

5. The communication system of claim 4 wherein the computer system comprises:
means for receiving (810, 820), in accordance with the first protocol, a request from the first wireless communication system (5050) for a routing number associated with a location of one of the plurality of mobile communication devices;
means for determining (835), from the registration information in the database (1200), where the mobile communication device is registered;
means for querying (820, 835) the second wireless system, in accordance with the second protocol, for a routing number in response to determining that the mobile communication device is registered at the second wireless communication system (5150);
means for receiving (810, 820), in accordance with the second protocol, a routing number from the second wireless communication system (5150); and
means for sending (820, 835), in accordance with the first protocol, the routing number to the first wireless communication system (5050).

6. The communication system of claim 4 or claim 5, wherein the computer system comprises:
a network discriminator module (810) for determining a type of system from which received messages originate;
a first message handler module (820) for decoding messages, formatted in accordance with the first protocol, received from the first wireless communication system (5050) and
for encoding messages in accordance with the first protocol for transmission to the first wireless communication system (5050);
a second message handler module (820) for decoding messages, formatted in accordance with -the second protocol, received from the second wireless communication system (5150) and for encoding messages in accordance with the second protocol for transmission to the second wireless communication system (5150); and
a network services module (830) for writing registration information associated with mobile communication devices in the first and second wireless communication system (5050; 5150) to the database (1200); for reading the registration information from the database; and for generating generic messages for communication with the first or second wireless communication system (5050; 5150).

7. The communication system of claim 6, wherein each module is implemented as a set of computer readable instructions capable of being executed by a microprocessor.

8. The communication system of one of claims 4 to 7, wherein the computer system (1000) comprises means for providing call screening and number translation services in accordance with mobile communication device user profiles stored in the database (1200).

## Patentansprüche

1. Verfahren zum Routen eines Anrufs zu einem Benutzer einer mobilen Kommunikationseinrichtung von einem ersten drahtlosen Kommunikationssystem (5050), während der Benutzer der mobilen Kommunikationseinrichtung in einem zweiten drahtlosen Kommunikationssystem (5150) roamt, wobei das erste drahtlose Kommunikationssystem (5050) ein erstes Protokoll verwendet und das zweite drahtlose Kommunikationssystem (5150) ein zweites Protokoll verwendet und das erste drahtlose Kommunikationssystem (5050) sowie das zweite drahtlose Kommunikationssystem (5150) beide mit einem Computersystem (1000) verbunden sind, welches entweder in dem ersten Protokoll oder in dem zweiten Protokoll kommunizieren kann, wobei das Verfahren umfaßt:
Empfangen (505) des Anrufs in dem ersten drahtlosen Kommunikationssystem (5050);
Absenden (515) einer Anforderung hinsichtlich einer Routingnummer von dem ersten drahtlosen Kommunikationssystem (5050) an das Computersystem (1000) gemäß dem ersten Protokoll;
Ermitteln (520) in dem Computersystem (1000), ob der Benutzer der mobilen Kommunikationseinrichtung in dem zweiten drahtlosen Kommunikationssystem (5150) registriert ist, durch Abfragen von Registrierungsinformation aus einer mit dem Computersystem (1000) verbundenen Datenbank (1200);
Absenden (525) einer Anforderung hinsichtlich einer für das zweite drahtlose Kommunikationssystem (5150) vorgesehenen Routingnummer gemäß dem zweiten Protokoll von dem Computersystem (1000) an das zweite drahtlose Kommunikationssystem (5150);
Senden (530) der Routingnummer von dem zweiten drahtlosen Kommunikationssystem (5150) an das Computersystem (1000) gemäß dem zweiten Protokoll;
Absenden (535) der Routingnummer von dem Computersystem (1000) an das erste drahtlose Kommunikationssystem (5050) gemäß dem ersten Protokoll; und
Routen (540) des Anrufs von dem ersten drahtlosen Kommunikationssystem (5050) zu dem zweiten drahtlosen Kommunikationssystem (5150) mittels der Routingnummer;
wobei das Computersystem (1000) eingerichtet ist, um:
- einem Benutzer einer mobilen Kommunikationseinrichtung zu gestatten (235), simultan in verschiedenen Kommunikationssystemen registriert zu sein;
- beim Empfang einer Anfrage hinsichtlich einer Routingnummer zu ermitteln (720), ob ein Benutzer einer mobilen Kommunikationseinrichtung simultan in verschiedenen Kommunikationssystemen registriert ist; und
- ein Kommunikationssystem auszuwählen (725), von dem eine Routingnummer gemäß eines Profils eines Benutzers der mobilen Kommunikationseinrichtung anzufordern ist, in Reaktion das auf Ermitteln, daß der Benutzer der mobilen Kommunikationseinheit simultan in verschiedenen Kommunikationssystemen registriert ist, wobei das Profil in der Datenbank (1200) gespeichert ist.

2. Verfahren nach Anspruch 1, das vor dem Schritt des Empfangens des Anrufs die Schritte umfaßt:
Empfangen (210) einer Nachricht von dem zweiten drahtlosen Kommunikationssystem (5150), das angibt, daß der Benutzer der mobilen Kommunikationseinrichtung eine Registrierung von dem zweiten drahtlosen Kommunikationssystem (5150) angefordert hat;
Speichern (225) einer Angabe in der Datenbank (1200), derzufolge der Benutzer der mobilen Kommunikationseinrichtung in dem zweiten drahtlosen Kommunikationssystem (5150) registriert ist;
Ermitteln (235), ob der Benutzer der mobilen Kommunikationseinrichtung in nur einem drahtlosen Kommunikationssystem registriert sein sollte; und
in Reaktion auf das Ermitteln, daß der Benutzer der mobilen Kommunikationseinrichtung nur in einem drahtlosen Kommunikationssystem registriert sein sollte, Senden (240) einer Nachricht an das erste drahtlose Kommunikationssystem (5050), daß der Benutzer der mobilen Kommunikationseinrichtung nicht länger in dem ersten drahtlosen Kommunikationssystem (5050) registriert ist.

3. Verfahren nach Anspruch 1 oder 2, wobei das Computersystem (1000) Anrufüberwachungs- und Nummerübertragungsdienste gemäß der in der Datenbank (1200) gespeicherten Profile des Benutzers der mobilen Kommunikationseinrichtung bietet.

4. Kommunikationssystem mit:
einem ersten drahtlosen Kommunikationssystem (5050), das gemäß einem ersten Protokoll kommuniziert;
einem zweiten drahtlosen Kommunikationssystem (5150), das gemäß einem zweiten Protokoll kommuniziert;
einer Datenbank (1200) mit Registrierungsinformation, die mit einer Vielzahl mobiler Kommunikationseinrichtungen in dem ersten drahtlosen Kommunikationssystem (5050) und in dem zweiten drahtlosen Kommunikationssystem (5150) verknüpft ist; und
einem Computersystem (1000), das mit der Datenbank zusammenwirkt und in Kommunikation mit dem ersten drahtlosen Kommunikationssystem (5050) und dem zweiten drahtlosen Kommunikationssystem (5150) ist, wobei das Computersystem (1000) auf die in der Datenbank (1200) vorliegenden Registrierungsinformation zugreifen kann, und das gemäß dem ersten Protokoll mit dem ersten drahtlosen Kommunikationssystem (5050) und gemäß dem zweiten Protokoll mit dem zweiten drahtlosen Kommunikationssystem (5150) kommunizieren kann,
wobei das Computersystem (1000) umfaßt:
eine Genehmigungseinrichtung (235), um es einem Benutzer einer mobilen Kommunikationseinrichtung zu gestatten, simultan in verschiedenen Kommunikationssystemen registriert zu sein;
eine Einrichtung zum Ermitteln, ob ein Benutzer einer mobilen Kommunikationseinrichtung simultan in mehreren Kommunikationssystemen registriert ist bei Empfangen einer Anfrage hinsichtlich einer Routingnummer; und
eine Einrichtung zum Auswählen (725) eines Kommunikationssystems, von dem eine Rou-tingnummer gemäß eines in der Datenbank (1200) gespeicherten Profils des Benutzers der mobilen Kommunikationseinrichtung anzufragen ist, abhängig vom Ermitteln, daß ein Benutzer einer mobilen Kommunikationseinrichtung simultan in verschiedenen Kommunikationssystemen registriert ist.

5. Kommunikationssystem nach Anspruch 4, wobei das Computersystem umfaßt:
eine Einrichtung zum Empfangen (810, 820) einer Anfrage von dem ersten drahtlosen Kommunikationssystem (5050) nach einer Routingnummer, die mit einem Aufenthaltsort einer von einer Vielzahl mobiler Kommunikationseinrichtungen verknüpft ist, gemäß einem ersten Protokoll;
eine Einrichtung zum Ermitteln (835), wo die mobile Kommunikationseinrichtung registriert ist, ausgehend von der in der Datenbank (1200) vorliegenden Registrierungsinformation;
eine Einrichtung zum Abfragen (820, 835) des zweiten drahtlosen Systems hinsichtlich einer Routingnummer gemäß dem zweiten Protokoll, in Reaktion auf Ermitteln, daß die mobile Kommunikationseinrichtung in dem zweiten drahtlosen Kommunikationssystem (5150) registriert ist;
eine Einrichtung zum Empfangen (810, 820) einer Routingnummer von dem zweiten drahtlosen Kommunikationssystem (5150) gemäß dem zweiten Protokoll; und
eine Einrichtung zum Senden (820, 835) der Routingnummer an das erste drahtlose Kommunikationssystem (5050) gemäß dem ersten Protokoll.

6. Kommunikationssystem nach Anspruch 4 oder 5, wobei das Computersystem umfaßt:
ein Netzunterscheidungsmodul (810) zum Ermitteln eines Systemtyps, von dem empfangene Nachrichten stammen;
ein erstes Nachrichten-Handhabungsmodul (820) zum Decodieren von Nachrichten, die gemäß dem ersten Protokoll formatiert sind und von dem ersten drahtlosen Kommunikationssystem (5050) empfangen werden, und zum Codieren von Nachrichten gemäß dem ersten Protokoll zur Übertragung an das erste drahtlose Kommunikationssystem (5050);
ein zweites Nachrichten-Handhabungsmodul (820) zum Decodieren von Nachrichten, die gemäß dem zweiten Protokoll formatiert sind und von dem zweiten drahtlosen Kommunikationssystem (5150) empfangen werden, und zum Codieren von Nachrichten gemäß dem zweiten Protokoll zur Übertragung an das zweite drahtlose Kommunikationssystem (5150); und
ein Netzdienstmodul (830) zum Schreiben von Registrierungsinformation in die Datenbank (1200), wobei die Registrierungsinformation mit mobilen Kommunikationseinrichtungen in dem ersten und zweiten drahtlosen Kommunikationssystem (5050, 5150) verknüpft ist, zum Lesen der Registrierungsinformation aus der Datenbank sowie zum Erzeugen generischer Nachrichten zur Kommunikation mit dem ersten und zweiten drahtlosen Kommunikationssystem (5050, 5150).

7. Kommunikationssystem nach Anspruch 6, wobei jedes Modul als ein Satz computerlesbarer Befehle implementiert ist, die von einem Mikroprozessor ausgeführt werden können.

8. Kommunikationssystem nach einem der Ansprüche 4 bis 7, wobei das Computersystem (1000) Einrichtungen umfaßt, um Anrufüberwachungs- und Nummerübersetzungsdienste gemäß der in der Datenbank (1200) gespeicherten Benutzerprofile der mobilen Kommunikationseinrichtungen vorzusehen.

## Revendications

1. Procédé pour router un appel vers un utilisateur de dispositif de communication mobile à partir d'un premier système de communication sans fil (5050) alors que l'utilisateur de dispositif de communication mobile se déplace dans un second système de communication sans fil (5150), le premier système de communication sans fil (5050) utilisant un premier protocole et le second système de communication sans fil (5150) utilisant un second protocole, le premier système de communication sans fil (5050) et le second système de communication sans fil (5150) étant tous les deux couplés à un système informatique (1000) qui est capable de communiquer en utilisant soit le premier protocole, soit le second protocole, le procédé comprenant les étapes consistant à :
recevoir (505) l'appel dans le premier système de communication sans fil (5050) ;
envoyer (515) une demande, conformément au premier protocole, du premier système de communication sans fil (5050) vers le système informatique (1000), de numéro de routage ;
déterminer (520) dans le système informatique (1000) que l'utilisateur de dispositif de communication mobile est enregistré dans le second système de communication sans fil (5150) en extrayant des informations d'enregistrement à partir d'une base de données (1200) couplée au système informatique (100) ;
envoyer (525) une demande, conformément au second protocole, du système informatique (1000) au second système de communication sans fil (5150), de numéro de routage pour le second système de communication sans fil (5150) ;
conformément au second protocole, envoyer (530) le numéro de routage du second système de communication sans fil (5150) vers le système informatique (1000) ;
conformément au premier protocole, envoyer (535) le numéro de routage du système informatique (1000) vers le premier système de communication sans fil (5050) ; et
router (540) l'appel du premier système de communication sans fil (5050) vers le second système de communication sans fil (5150) en utilisant le numéro de routage ;
dans lequel le système informatique (1000) fonctionne pour :
permettre (235) à un utilisateur de dispositif de communication mobile d'être enregistré simultanément dans de multiples systèmes de communication ;
à réception d'une demande de numéro de routage, déterminer (720) si un utilisateur de dispositif de communication mobile est enregistré simultanément dans de multiples systèmes de communication ; et
en réponse à la détermination qu'un utilisateur de dispositif de communication mobile est enregistré simultanément dans de multiples systèmes de communication, sélectionner (725) un seul système de communication à partir duquel demander un numéro de routage conformément à un profil pour l'utilisateur de dispositif de communication sans fil, le profil étant stocké dans la base de données (1200).

2. Procédé selon la revendication 1, dans lequel avant l'étape consistant à recevoir l'appel, le procédé comprend les étapes consistant à :
recevoir (210) un message provenant du second système de communication sans fil (5150) indiquant que l'utilisateur de dispositif de communication mobile a demandé un enregistrement dans le second système de communication sans fil (5150) ;
stocker (225) dans la base de données (1200) une indication selon laquelle l'utilisateur de dispositif de communication mobile est enregistré dans le second système de communication sans fil (5150) ;
déterminer (235) si l'utilisateur de.dispositif de communication mobile doit être enregistré dans seulement un seul système de communication sans fil ; et
en réponse à la détermination que l'utilisateur de dispositif de communication mobile doit être enregistré dans seulement un système de communication sans fil, envoyer (240) un message vers le premier système de communication sans fil (5050) indiquant que l'utilisateur de dispositif de communication mobile n'est plus enregistré dans le premier système de communication sans fil (5050).

3. Procédé selon la revendication 1 ou la revendication 2, dans lequel le système informatique (1000) fournit des services de filtrage d'appels et de transfert de numéros conformément aux profils d'utilisateur de dispositif de communication mobile stockés dans la base de données (1200).

4. Système de communication comprenant :
un premier système de communication sans fil (5050) qui communique conformément à un premier protocole ;
un second système de communication sans fil (5150) qui communique conformément à un second protocole ;
une base de données (1200) comprenant des informations d'enregistrement associées à une pluralité de dispositifs de communication mobile dans le premier système de communication sans fil (5050) et dans le second système de communication sans fil (5150) ; et
un système informatique (1000), couplé de manière fonctionnelle à la base de données et en communication avec le premier système de communication sans fil (5050) et le second système de communication sans fil (5150), qui est capable d'accéder aux informations d'enregistrement dans la base de données (1200) et de communiquer avec le premier système de communication sans fil (5050) conformément au premier protocole et avec le second système de communication sans fil (5150) conformément au second protocole ;
dans lequel le système informatique (1000) comprend :
un moyen pour permettre (235) à un utilisateur de dispositif de communication mobile d'être enregistré simultanément dans de multiples systèmes de communication ;
un moyen pour déterminer (720), à réception d'une demande de numéro de routage, si un utilisateur de dispositif de communication mobile est enregistré simultanément dans de multiples systèmes de communication ; et
un moyen pour sélectionner (725), en réponse à la détermination qu'un utilisateur de dispositif de communication mobile est enregistré simultanément dans de multiples systèmes de communication, un seul système de communication à partir duquel demander un numéro de routage conformément à un profil pour l'utilisateur de dispositif de communication sans fil, le profil étant stocké dans la base de données (1200).

5. Système de communication selon la revendication 4, dans lequel le système informatique comprend :
un moyen pour recevoir (810, 820), conformément au premier protocole, une demande, provenant du premier système de communication sans fil (5050), d'un numéro de routage associé à un endroit d'un des dispositifs d'une pluralité de dispositifs de communication mobile ;
un moyen pour déterminer (835), à partir des informations d'enregistrement dans la base de données (1200), où le dispositif de communication mobile est enregistré ;
un moyen pour demander (820, 835) au second système sans fil, conformément au second protocole, un numéro de routage en réponse à la détermination que le dispositif de communication mobile est enregistré dans le second système de communication sans fil (5150) ;
un moyen pour recevoir (810, 820), conformément au second protocole, un numéro de routage provenant du second système de communication sans fil (5150) ; et
un moyen pour envoyer (820, 835), conformément au premier protocole, le numéro de routage vers le premier système de communication sans fil (5050).

6. Système de communication selon la revendication 4 ou la revendication 5, dans lequel le système informatique comprend :
un module de distinction de réseau (810) pour déterminer un type de système d'où proviennent les messages reçus ;
un premier module gestionnaire de messages (820) pour décoder les messages, formatés conformément au premier protocole, reçus en provenance du premier système de communication sans fil (5050) et pour encoder les messages conformément au premier protocole pour la transmission vers le premier système de communication sans fil (5050) ;
un second module gestionnaire de messages (820) pour décoder les messages, formatés conformément au second protocole, reçus en provenance du second système de communication sans fil (5150) et pour encoder les messages conformément au second protocole pour la transmission vers le second système de communication sans fil (5150) ; et
un module de services de réseau (830) pour écrire les informations d'enregistrement associées aux dispositifs de communication mobile dans les premier et second systèmes de communication sans fil (5050 ; 5150) dans la base de données (1200) ; pour lire les informations d'enregistrement de la base de données ; et pour générer des messages génériques pour une communication avec les premier et second systèmes de communication sans fil (5050 ; 5150).

7. Système de communication 6, dans lequel chaque module est implanté sous forme d'un ensemble d'instructions lisibles par l'ordinateur capables d'être exécutées par un microprocesseur.

8. Système de communication selon l'une des revendications 4 à 7, dans lequel le système informatique (1000) comprend un moyen pour fournir des services de filtrage d'appels et de transfert de numéros conformément aux profils d'utilisateur de dispositif de communication mobile stockés dans la base de données (1200).
